# EUROPÄISCHE PATENTSCHRIFT

(11) **EP 1 712 498 B1**
(45) Veröffentlichungstag und Bekanntmachung des Hinweises auf die Patenterteilung: **18.06.2008**
(21) Anmeldenummer: 06006974.7
(22) Anmeldetag: 31.03.2006
(51) Int. Cl.: B65G 69/18

(54) **Dichtsystem für Schliessklappen**
Sealing system for closing flaps
Système d'étanchéité pour des clapets de fermeture

(30) Priorität: 14.04.2005 DE 102005017224
(43) Veröffentlichungstag der Anmeldung: 18.10.2006
(73) Patentinhaber: Glatt Systemtechnik GmbH, 01277 Dresden (DE)
(72) Erfinder: Pritzke, Heinz, 01737 Kesselsdorf/OT Braunsdorf (DE)
(74) Vertreter: Pätzelt, Peter

(56) Entgegenhaltungen:
- EP-A- 1 081 420
- DE-A1- 10 010 586
- DE-C1- 19 520 409
- DE-C1- 19 642 969
- US-A- 5 284 182
- US-A- 5 540 266
- US-A1- 2003 062 500
- US-B1- 6 202 983

## Beschreibung

Die Erfindung betrifft ein Dichtsystem für Schließklappen an Durchlassöffnungen von zwei kuppelbaren Einrichtungen, wobei die Schließklappen der beiden Einrichtungen in gekuppelter Stellung aneinander liegen und gemeinsam geöffnet werden können, so dass die Innenräume der beiden Einrichtungen miteinander verbunden sind. In entkuppelter Stellung kann jede der Schließklappen die Durchlassöffnung der zugehörigen Einrichtung unabhängig von der anderen Schließklappe an der anderen Einrichtung verschließen oder öffnen.

Ein derartiges Dichtsystem ist in der DE 19643248 C2 beschrieben. Mindestens eine der beiden zusammenwirkenden Schließklappen weist in der Schließstellung zur Abdichtung gegenüber einer zugehörigen Durchlaßöffnung an ihrem Umfang eine Dichtung auf. Dazu ist am Umfang der Schließklappe eine Nut vorhanden, die beidseitig von ringförmigen Schenkeln begrenzt wird. Der Schenkel, der in der Schließstellung die Nut zum Innenraum der jeweiligen Einrichtung begrenzt, reicht bis nahe an die Dichtfläche der Durchflussöffnung heran und der andere Schenkel ist gegenüber dem ersteren radial verkürzt. Eine.Dichtung weist im Bereich radial außerhalb des verkürzten Schenkels eine elastische Wulst auf, die den verkürzten Schenkel axial übergreift. In ungekuppelter Stellung der Einrichtungen überragt die Dichtung die Dichtebene zwischen den zusammenwirkenden Schließklappen. Bei gekuppelter Stellung füllt die Dichtung den gesamten äußeren Bereich der parallel aneinander liegenden Schließklappen bis zur Dichtfläche in der Durchlaßöffnung aus.

In der Praxis ist es auch bei hochgenauer Fertigung schwierig, die zwangsläufig auftretenden Toleranzen derart auszugleichen, dass sich tatsächlich keinerlei unerwünschte Räume ausbilden können, in denen sich sensibles pharmazeutisches Gut anlagern kann.

Der Erfindung liegt damit als Aufgabe zugrunde, die nach dem Stand der Technik bekannten Dichtsysteme, wie z.B. aus DE 196 42 969 bekannt, derart zu verbessern, dass Fertigungstoleranzen bei der Montage der Dichtsysteme ausgeglichen und die Dichtigkeit weiter verbessert werden können.

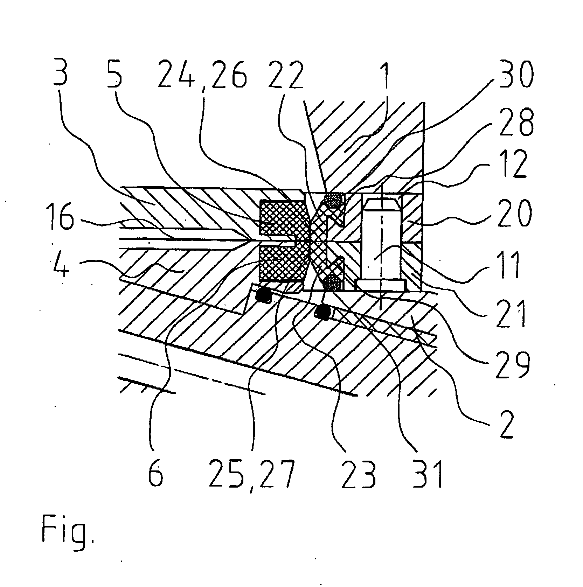

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Der Kern der Erfindung besteht darin, dass ein Dichtsystem für Schließklappen an Durchlassöffnungen von zwei kuppelbaren Einrichtungen, wobei die Schließklappen der beiden Einrichtungen in gekuppelter Stellung aneinander liegen und gemeinsam geöffnet werden können, wesentlich verbessert wird. An jeder der beiden Einrichtungen ist ein lösbarer Justierring vorhanden, an dessen radial innerer Fläche ein Dichtelement und an dessen innerer Fläche die Dichtfläche der Einrichtung ausgebildet ist. Mindestens an einem der beiden Dichtelemente ist eine Dichtung vorhanden, mit der die Dichtelemente in gekuppelter Stellung im Bereich der radial äußeren Dichtungen der Schließklappen gegeneinander abgedichtet sind. Die Dichtelemente können auch derart über die Dichtebene ragen, dass in gekuppelter Stellung der Einrichtungen die beiden Dichtelemente unter Spannung dichtend aneinander liegen und somit als Dichtung zwischen den beiden Dichtelementen wirken.

Die Dichtelemente sind gegenüber der zugehörigen Einrichtung axial abgedichtet und können formschlüssig an den zugehörigen Justierringen gehaltert sein, wobei zwischen Dichtelement und Justierring eine axiale Toleranz gewährleistet sein kann. Die Dichtfläche der Dichtelemente können mindestens teilweise ringförmige Lippen aufweisen.

In vorteilhafter Weise sind mindestens an einem der Justierringe Passstifte vorgesehen, die in gekuppelter Stellung in Passlöcher des anderen Justierringes eingreifen. Beim Ineinandergreifen der Elemente bei der Montage und bevor die Justierringe an den Einrichtungen arretiert werden, wird eine gute Ausrichtung der Schließklappen zu den Justierringen ermöglicht.

Der vorteil der erfindungsgemäßen Lösung besteht insbesondere darin, dass bei gleichzeitiger Erhöhung der Dichtigkeit die Fertigungstoleranzen für eine wirtschaftliche Montage der Dichtsysteme gegenüber den Lösungen nach dem Stand der Technik wesentlich erhöht oder besser ausgeglichen werden können.

Die Erfindung wird nachstehend an einem Ausführungsbeispiel näher erläutert. Die zugehörige Zeichnung zeigt einen Schnitt durch zwei gekuppelte Einrichtungen im Bereich der Dichtflächen und der Schließklappen.

### Ausführungsbeispiel

Die zugehörige Zeichnung zeigt einen Schnitt durch zwei gekuppelte Einrichtungen im Bereich der Dichtflächen für die zugehörigen Schließklappen. Eine erste Einrichtung 1 und eine zweite Einrichtung 2 weisen in bekannter Weise zugehörige Schließklappen 3 und 4 mit radial äußeren Dichtungen 5 und 6 auf. Die Schließklappen 3 und 4 liegen in der Dichtebene 16 aneinander und werden durch die Dichtungen 5 und 6 gegeneinander abgedichtet. Weiterhin dichten die Dichtungen 5 und 6 die Einrichtungen 1 und 2 im Zusammenwirken mit deren Dichtflächen 24 und 25 gegeneinander ab.

An jeder der beiden Einrichtungen 1 und 2 befindet sich je ein Justierring 20 und 21, die lösbar an den zugehörigen Einrichtungen 1 und 2 angeordnet sind. Unter lösbar werden alle Techniken verstanden, mit denen vor der endgültigen Arretierung die Positionierung der Justierringe 20 und 21 gegenüber den Einrichtungen 1 und 2 im Rahmen von erforderlichen Toleranzen möglich ist. Im vorliegenden Beispiel wurde eine Verschraubung mit einem radialen Toleranzausgleich von etwa 0,8 mm eingesetzt. Die verschraubung ist in Figur nicht dargestellt.

In vorteilhafter Weise sind am Justierring 21 zwei Passstifte 11 vorgesehen, die in Passlöcher 12 am Justierring 20 eingreifen. Mit den Passstiften 11 und Passlöchern 12 ist praktisch eine ausreichende Positionierung der Justierringe 20 und 21 gegenüber den Schließklappen 3 und 4 mit den Dichtungen 5 und 6 gewährleistet, bevor die Justierringe 20 und 21 an den Einrichtungen 1 und 2 endgültig arretiert werden.

Erfindungsgemäß weisen die Justierringe 20 und 21 zusätzliche Dichtelemente 22 und 23 mit zugehörigen Dichtflächen 24 bzw. 25 auf. An den Dichtflächen 24 bzw. 25 sind mindestens teilweise ringförmige Lippen 26 und 27 vorgesehen, mit denen mögliche Verschmutzungen an den radial äußeren Flächen der Dichtungen 5 und 6 im Moment des Schließens der Schließklappen in vorteilhafter weise gut abgewischt werden können.

Die Dichtelemente 22 und 23 sind formschlüssig auf den zugehörigen Justierringen 20 und 21 gehaltert. Das wird im Ausführungsbeispiel durch Hinterschneidungen 28 und 29 an den Justierringen 20 und 21 sowie den Dichtelementen 22 und 23 gewährleistet. Die Dichtelemente 22 und 23 sind aus einem festen aber ausreichend elastischen Kunststoff mit guten Gleiteigenschaften hergestellt.

zwischen den Dichtelementen 22 und 23, und den Justierringen 20 und 21 sowie den Einrichtungen 1 und 2 sind zur Abdichtung Dichtringe 30 und 31 vorgesehen. Die Montage der Dichtelemente 22 und 23 und der Dichtringe 30 und 31 auf den Justierringen 20 und 21 erfolgt vor der Arretierung der Justierringe 20 und 21 an den Einrichtungen 1 bzw. 2.

Die Dichtelemente 22 und 23 sind auf den Justierringen 20 und 21 mit axialer Toleranz gehaltert, wobei die Dichtelemente 22 und 23 in ungekuppelter Position über die Dichtebene 16 ragen, damit in gekuppelter Position eine gute Abdichtung gewährleistet ist. Die in der Dichtebene 16 aneinander stoßenden Flächen der Dichtelemente 22 und 23 wirken dabei nach dem entsprechenden Merkmal des Anspruchs 1 als Dichtung zwischen den beiden Justierringen.

## Patentansprüche

1. Dichtsystem für Schließklappen an Durchlassöffnungen von zwei kuppelbaren Einrichtungen (1, 2), die in der gekuppelten Stellung in einer Dichtebene (16) abgedichtet aneinander liegen, und bei dem die Schließklappen (3, 4) radial außen eine Dichtung (5, 6) aufweisen, welche mit je einer Dichtfläche (24, 25) an der zugehörigen Einrichtung (1, 2) zusammenwirken, wobei
- an jeder der beiden Einrichtungen (1, 2) axial zur Durchlassöffnung ein lösbarer Justierring (20, 21) vorhanden ist, und wobei
- die Dichtflächen (24, 25) an Dichtelementen (22, 23) vorgesehen sind, welche an den radial inneren Flächen der Justierringe (20, 21) angeordnet sind, wobei die Dichtelemente (22, 23) in gekuppelter Stellung im Bereich der radial äußeren Dichtungen (5, 6) der Schließklappen (3, 4) gegeneinander abgedichtet sind,
**dadurch gekennzeichnet, dass**
- die Dichtelemente (22, 23) gegenüber der zugehörigen Einrichtung (1, 2) axial abgedichtet sind.

2. Dichtsystem für Schließklappen nach Anspruch 1, **dadurch gekennzeichnet, dass** mindestens an einem der Justierringe (10, 21) Passstifte (11) vorgesehen sind, die in gekuppelter Stellung in Passlöcher (12) des anderen Justierringes (9, 20) eingreifen.

3. Dichtsystem für Schließklappen nach Anspruch 1 oder 2, **dadurch gekennzeichnet, dass** die Dichtelemente (22, 23) derart über die Dichtebene (16) ragen, dass in gekuppelter Stellung der Einrichtungen (1, 2) die beiden Dichtelemente (22, 23) unter Spannung dichtend aneinander liegen.

4. Dichtsystem für Schließklappen nach einem der Ansprüche 1 bis 3, **dadurch gekennzeichnet, dass** die Dichtelemente (22, 23) formschlüssig am zugehörigen Justierring (20, 21) gehaltert sind.

5. Dichtsystem für Schließklappen nach Anspruch 4, **dadurch gekennzeichnet, dass** die Dichtelemente (22, 23) auf den zugehörigen Justierringen (20, 21) mit axialer Toleranz gehaltert sind.

6. Dichtsystem für Schließklappen nach einem der Ansprüche 1 bis 5, **dadurch gekennzeichnet, dass** die Dichtflächen (24, 25) an den Dichtelementen (22, 23) mindestens teilweise ringförmige Lippen aufweisen.

## Claims

1. Sealing system for closing flaps on passage orifices of two couplable devices (1, 2) which, in the coupled position, lie, sealed off in a sealing plane (16), one against the other, in which sealing system the closing flaps (3, 4) have a seal (5, 6) radially on the outside, the said seals cooperating in each case with a sealing surface (24, 25) on the associated device (1, 2), with
- a releasable adjusting ring (20, 21) being present on each of the two devices (1, 2) axially with respect to the passage orifice, and
- the sealing surfaces (24, 25) being provided on sealing elements (22, 23) which are arranged on the radially inner surfaces of the adjusting rings (20, 21), in the coupled position the sealing elements (22, 23) being sealed off relative to one another in the region of the radially outer seals (5, 6) of the closing flaps (3, 4),
**characterized in that**
- the sealing elements (22, 23) are sealed off axially with respect to the associated device (1, 2).

2. Sealing system for closing flaps according to Claim 1, **characterized in that** locating pins (11) are provided at least on one of the adjusting rings (10, 21) and, in the coupled position, engage into locating holes (12) of the other adjusting ring (9, 20).

3. Sealing system for closing flaps according to Claim 1 or 2, **characterized in that** the sealing elements (22, 23) project beyond the sealing plane (16) in such a way that, when the devices (1, 2) are in the coupled position, the two sealing elements (22, 23) lie sealingly under tension one against the other.

4. Sealing system for closing flaps according to one of Claims 1 to 3, **characterized in that** the sealing elements (22, 23) are held with a form fit on the associated adjusting ring (20, 21).

5. Sealing system for closing flaps according to Claim 4, **characterized in that** the sealing elements (22, 23) are held on the associated adjusting rings (20, 21) with an axial tolerance.

6. Sealing system for closing flaps according to one of Claims 1 to 5, **characterized in that** the sealing surfaces (24, 25) on the sealing elements (22, 23) have at least partially annular lips.

## Revendications

1. Système d'étanchéité pour des clapets de fermeture au niveau d'ouvertures de passage de deux dispositifs accouplables (1, 2), qui se situent, dans la position accouplée, hermétiquement l'un contre l'autre dans un plan d'étanchéité (16), et dans lequel les clapets de fermeture (3, 4) présentent, radialement vers l'extérieur, un joint d'étanchéité (5, 6) qui coopère avec une surface d'étanchéité respective (24, 25) au niveau du dispositif associé (1, 2),
- une bague d'ajustement détachable (20, 21) étant prévue sur chacun des deux dispositifs (1, 2) axialement par rapport à l'ouverture de passage, et
- les surfaces d'étanchéité (24, 25) étant prévues sur des éléments d'étanchéité (22, 23) qui sont disposés sur les surfaces radialement internes des bagues d'ajustement (20, 21), les éléments d'étanchéité (22, 23) étant hermétiques l'un à l'autre dans l'état accouplé dans la région des joints d'étanchéité radialement extérieurs (5, 6) des clapets de fermeture (3, 4),
**caractérisé en ce que**
- les éléments d'étanchéité (22, 23) sont axialement hermétiques par rapport au dispositif associé (1, 2).

2. Système d'étanchéité pour des clapets de fermeture selon la revendication 1, **caractérisé en ce que** des broches d'ajustement (11) sont prévues au moins sur l'une des bagues d'ajustement (10, 21), et viennent en prise dans la position accouplée dans des trous d'ajustement (12) de l'autre bague d'ajustement (9, 20) .

3. Système d'étanchéité pour des clapets de fermeture selon la revendication 1 ou 2, **caractérisé en ce que** les éléments d'étanchéité (22, 23) dépassent du plan d'étanchéité (16) de telle sorte que dans la position accouplée des dispositifs (1, 2), les deux éléments d'étanchéité (22, 23) s'appliquent hermétiquement l'un contre l'autre sous contrainte.

4. Système d'étanchéité pour des clapets de fermeture selon l'une quelconque des revendications 1 à 3, **caractérisé en ce que** les éléments d'étanchéité (22, 23) sont fixés par engagement par coopération de forme à la bague d'ajustement associée (20, 21).

5. Système d'étanchéité pour des clapets de fermeture selon la revendication 4, **caractérisé en ce que** les éléments d'étanchéité (22, 23) sont fixés sur les bagues d'ajustement associées (20, 21) avec une tolérance axiale.

6. Système d'étanchéité pour des clapets de fermeture selon l'une quelconque des revendications 1 à 5, **caractérisé en ce que** les surfaces d'étanchéité (24, 25) sur les éléments d'étanchéité (22, 23) présentent des lèvres au moins partiellement annulaires.
